# EUROPÄISCHE PATENTSCHRIFT

(11) **EP 0 448 612 B1**
(45) Veröffentlichungstag und Bekanntmachung des Hinweises auf die Patenterteilung: **14.09.1994**
(21) Anmeldenummer: 90900820.3
(22) Anmeldetag: 11.12.1989
(51) Int. Cl.: G01C 19/66

(54) **RINGLASER-AUSLESEVORRICHTUNG**
READ-OUT DEVICE FOR RING LASERS
DISPOSITIF DE MESURE POUR LASERS ANNULAIRES

(30) Priorität: 14.12.1988 DE 3842040; 18.04.1989 DE 3916572
(43) Veröffentlichungstag der Anmeldung: 02.10.1991
(73) Patentinhaber: HONEYWELL AG, 63067 Offenbach (DE)
(72) Erfinder: HOCK, Fromund, D-3003 Ronnenberg 3 (DE)
(74) Vertreter: Herzbach, Dieter, Dipl.-Ing.
(86) Internationale Anmeldenummer: EP8901514
(87) Internationale Veröffentlichungsnummer: WO9007099

(56) Entgegenhaltungen:
- FR-A- 1 388 732
- US-A- 4 582 429
- US-A- 4 712 917

## Beschreibung

Die vorliegende Erfindung bezieht sich auf eine Auslesevorrichtung für einen Ringlaserkreisel nach dem Gattungsbegriff eines der unabhängigen Ansprüche.

Im Gegensatz zu einem passiven Sagnac-Interferometer, bei dem eine Lichtquelle außerhalb eines Ringresonators angeordnet ist und bei dem die Phasendifferenz bei einer Drehung des Ringresonators ausgewertet wird, ist ein Ringlaserkreisel ein aktives Interferometer, bei dem die Frequenz der beiden gegensinning umlaufenden Wellen bei einer Drehung des Resonatorraumes eine Verschiebung erfährt, die mit einer Auslesevorrichtung ausgewertet werden kann.

Die bislang bekannten Auslesevorrichtungen (siehe z.B. F. Aronowitz "The Laser Gyro" erschienen in Laser Applications, Band 1, 1971, Seite 137 - 140, Academic Press, Inc., New York und London) benutzen ein Tripelprisma hinter einem teildurchlässigen Auskoppelspiegel, wobei ein Laserstrahl den teildurchlässigen Auskoppelspiegel und das Tripelprisma mit entsprechender Brechung direkt durchläuft und der gegenläufige Laserstrahl durch eine dreifache Totalreflexion und die Vorgabe eines kleinen öffnungswinkels durch das Tripelprisma dem anderen Laserstrahl überlagert wird. Zur Auslesung wird die Interferenzmodulation der beiden überlagerten gegensinnig umlaufenden Laserstrahlen durch zwei Empfangsflächen einer Doppeldiode in elektrische Signale umgewandelt. Die Interferenzstreifenbreite wird durch den öffnungswinkel zwischen den beiden überlagerten Laserstrahlen vorgegeben. Die im Strahlengang wirksamen optischen Komponenten beeinflußen durch die zu tolerierenden Winkelabweichungen den gewünschten Interferenzstreifenabstand. Ferner wird die Modulationstiefe der Interferenzstreifen durch die Wahl des Teilerverhältnisses der Rückseitenverspiegelung und die Transmissionsverluste im Tripelprisma bestimmt.

Die Auswertung der Interferenzmodulation durch die erwähnte Doppeldiode führt zu den für die Vorzeichenerkennung notwendigen Quadratursignalen. Die Signalamplitude entspricht dem Integral der Intensität über den Empfangsflächen. Die Phasenlage des Signals wird durch die wirksame Breite des Spaltes zwischen den Empfangsflächen bestimmt. Eine Verringerung der Strahlungsintensität der Laseremission führt zu einer Verringerung der Gleichlicht-Mittelwerte und damit zu einer unerkannten Auswanderung des Bezugspunktes für die Rotation des elektrischen Drehzeigers, der durch das Signalpaar aus den Photodioden definiert ist. Dies führt zu Fehlern in der elektrischen Bewertung der Interferenzphase. Somit ist die Signalcharakteristik beider Signale von einer Vielzahl von Fertigungstoleranzen abhängig und die bislang verwendete bekannte Auslesevorrichtung führt nur selten zu optimalen Signalverhältnissen. Ferner ist die bekannte Auslesevorrichtung aufgrund ihres unsymmetrischen Aufbaues anfällig für Vibrationen und Temperaturänderungen, die Modulationstiefe ist gering und der Auftritt von Fehlimpulsen ist nicht auszuschließen.

Aus der US-A-4 712 917 ist eine Auslesevorrichtung bekannt, die anstelle des üblicherweise verwendeten Tripelprismas ein völlig symmetrisches Dachkantprisma verwendet, um eine phasengleiche überlagerung der Laserstrahlen herbeizuführen.

Aus der FR-A-1 388 732 ist ein Laserkreisel bekannt, bei dem durch ein doppelbrechendes Blättchen in der Laserstrecke selbst auch im Ruhezustand eine Frequenzdifferenz bezüglich der gegensinnig umlaufenden Laserstrahlen vorgegeben wird. Die hierbei polarisierten Laserstrahlen werden über einen Auslesespiegel, Analysatoren und Umlenkspiegel einem Photodetektor zur Auswertung zugeführt.

Ausgehend von diesem Stand der Technik ist es die Aufgabe der vorliegenden Erfindung, eine verbesserte Auslesevorrichtung anzugeben, die unempfindlich gegen Vibrationen und Temperaturschwankungen ist, eine große Modulationstiefe aufweist und eine Phasenverschiebung zwischen den Signalen von exakt 90° einzustellen gestattet, so daß der Auftritt von Fehlimpulsen weitgehendst ausgeschlossen ist.

Die Lösung dieser Aufgabe gelingt gemäß den kennzeichnenden Merkmalen der unabhängigen Ansprüche. Weitere vorteilhafte Ausgestaltungen der erfindungsgemäßen Auslesevorrichtung sind den abhängigen Ansprüchen entnehmbar.

Die erfindungsgemäße Auslesevorrichtung macht hierbei von bekannten polarisierenden, strahlaufspaltenden und phasenschiebenden Mitteln Gebrauch, wie sie in der Dissertation: "Photoelektrische Messung der Änderung von Längen oder Winkelpositionen mit Hilfe von Beugungsgittern" Stuttgart 1976, Verfasser: Dipl.-Phys. Fromund Hock, dargestellt und beschrieben sind. In der Verwendung dieser Mittel in einer streng symmetrischen Anordnung zur überlagerung der beiden gegensinnig umlaufenden Laserstrahlen bei einem aktiven Ringlaserkreisel ist die vorliegende Erfindung zu sehen.

Anhand von in den Figuren der beiliegenden Zeichnung dargestellten Ausführungsbeispielen sei im folgenden die erfindungsgemäße Auslesevorrichtung näher beschrieben. Es zeigen:
- Figur 1: ein erstes Ausführungsbeispiel einer erfindungsgemäßen Auslesevorrichtung;
- Figur 2: ein zweites Ausführungsbeispiel einer erfindungsgemäßen Auslesevorrichtung;
- Figur 2a: eine Schnittansicht gemäß Linie A-B in Figur 2;
- Figur 3: ein drittes Ausführungsbeispiel einer erfindungsgemäßen Auslesevorrichtung;
- Figur 3a: eine perspektivische Ansicht einer in Figur 3 verwendeten optischen Komponente;
- Figur 4: ein viertes Ausführungsbeispiel einer erfindungsgemäßen Auslesevorrichtung;
- Figur 4a: eine perspektivische Ansicht einer in Figur 4 verwendeten optischen Komponente;
- Figur 5: ein fünftes Ausführungsbeispiel einer erfindungsgemäßen Auslesevorrichtung;
- Fig. 5a,b: Draufsichten auf für die Ausführung der Erfindung wesentliche Komponenten; und
- Figur 5c: die Signalauswertevorrichtung in näherer Ausgestaltung.

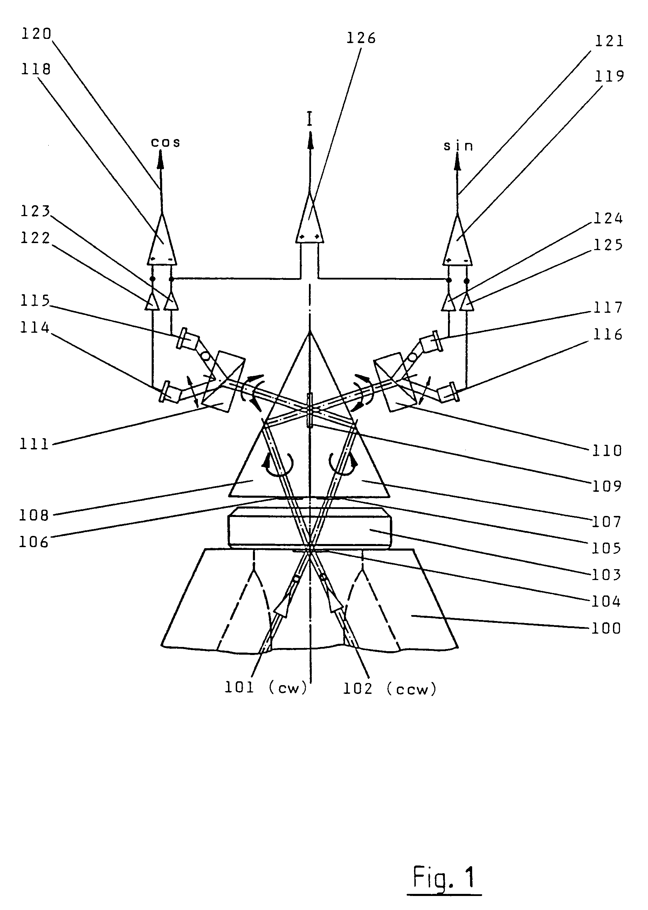

Gemäß Figur 1 weist ein herkömmlicher Ringlaserkreisel 100 eine dreieckförmige Resonatorstrecke auf, entlang der zwei Laserstrahlen 101 und 102 gegenläufig umlaufen. Sowohl der im Uhrzeigersinn (cw) umlaufende Laserstrahl 101 als auch der im Gegenuhrzeigersinn (ccw) umlaufende Laserstrahl 102 treffen auf einen teildurchlässigen Spiegel 104, der sich auf einem Spiegelträger 103 befindet. Der Spiegelträger 103 besteht vorzugsweise aus Glaskeramik (Zerodur), wobei die Verbindung des Spiegelträgers 103 mit dem Ringlaserkreisel 100 durch Polieren und Ansprengen (optischer Kontakt) erfolgt. Soweit die Anordnung bis hierher beschrieben wurde, handelt es sich um einen herkömmlichen Ringlaserkreisel.

Im Weg der den Spiegelträger 103 verlassenden Laser-Teilstrahlen cw-101 und ccw-102 sind z.B. Glimmerplättchen 105, 106 als λ/4-Verzögerer angeordnet, deren Hauptschwingungsrichtungen unter ± 45° zu den Polarisationsrichtungen orientiert sind, wodurch das im Laser linear polarisierte Licht in entgegengesetzt zirkular polarisiertes Licht umgewandelt wird. Die Glimmerplättchen 105, 106 sind auf der Unterseite zweier Prismenhälften 107, 108 angeordnet, die unter Zwischenfügung einer polarisationsneutralen Strahlteilerschicht 109 miteinander verkittet sind, so daß sich eine dreieckförmige Konfiguration ergibt. Diese dreieckförmige Konfiguration 107, 108 kann prinzipiell auch mit dem Spiegelträger 103 verbunden sein.

An dem Strahlteiler 109 erfolgt jeweils eine überlagerung der beiden gegensinnig zirkular polarisierten Laser-Teilstrahlen, die nach dem Verlassen der dreieckförmigen Konfiguration 107, 108 jeweils einem Wollastonprisma 110, 111 zugeführt werden, das als Polarisations-Strahlteiler wirkt und die beiden zirkular polarisierten Teilstrahlen in orthogonal zueinander polarisierte Teilstrahlen aufspaltet, die jeweils Photodioden 114, 115 bzw. 116, 117 zugeführt werden. Die Wollastonprismen 110, 111 sind gegeneinander um 45° in bezug auf die Strahlachse verdreht. Hierdurch entstehen im Gegentakt modulierte Signale an den Photodioden 114-117, die durch Differenzverstärker 118, 119 subtrahiert werden, wodurch sich die Gleichanteile zu Null kompensieren, während die Wechselanteile sich in erwünschter Weise addieren. über Vorverstärker 122 - 125 können die Signalamplituden auf gleiche Werte eingestellt werden, während die Modulationsphase durch Winkelabgleich eines der Wollastonprismen 110, 111 auf exakt 90° einstellbar ist. An den Ausgängen 120, 121 der Verstärker 118, 119 stehen somit die erwünschten Quadratursignale an. Ein weiterer Verstärker 126 kann benutzt werden, um ein Intensitätssignal I für die Resonatorlängenregelung zu gewinnen.

Die vorstehend beschriebene neue Auslesevorrichtung zeichnet sich durch einen streng symmetrischen Aufbau aus, die eine hohe Unempfindlichkeit gegenüber Umwelteinflüssen wie Vibrationen und Temperaturänderungen aufweist. Durch die große Modulationstiefe und die justierbare Phasenlage ist es möglich, mit einem geringen Schwellwert hinsichtlich der nachgeschalteten Auswerteelektronik zu arbeiten. Durch eine Verringerung der Impulsbreite läßt sich ferner das Phasenrauschen der Ausgangsimpulse reduzieren, so daß Fehlimpulse im wesentlichen unterdrückt werden.

Eine Auslesevorrichtung dieser Art kann sowohl gehäusefest, wie in Figur 1 dargestellt, als auch blockfest mit dem Ringlaserkreisel 100 montiert werden. Bei gehäusefester Montage läßt sich die Kompensation der üblicherweise vorgesehenen Hilfsschwingung (Ditherbewegung) durch entsprechende Wahl des im Strahlengang optisch wirksamen Materials bis.zur Strahlvereinigung, sowie durch Wahl des Hilfsschwing-Drehpunktes und der Auskoppelstelle realisieren. Hierbei ist es hilfreich, daß sich die optischen Wege der beiden Strahlen gegensinnig ändern und dadurch der zur Kompensation der Hilfsschwingung genutzte Effekt deutlich größer als bei einer herkömmlichen Auslesevorrichtung ist.

Bei einer blockfesten Montage der Auslesevorrichtung erhält man einen kompakteren Aufbau, der insbesondere unempfindlich gegen Schock- und Schwingungsbelastung ist. Die Kompensation der Hilfsschwingbewegung muß in diesem Fall elektronisch erfolgen, was durch die bessere Signalqualität, insbesondere bezüglich der Phaseninformation ebenfalls besser als bei einer herkömmlichen Auslesevorrichtung zu realisieren ist.

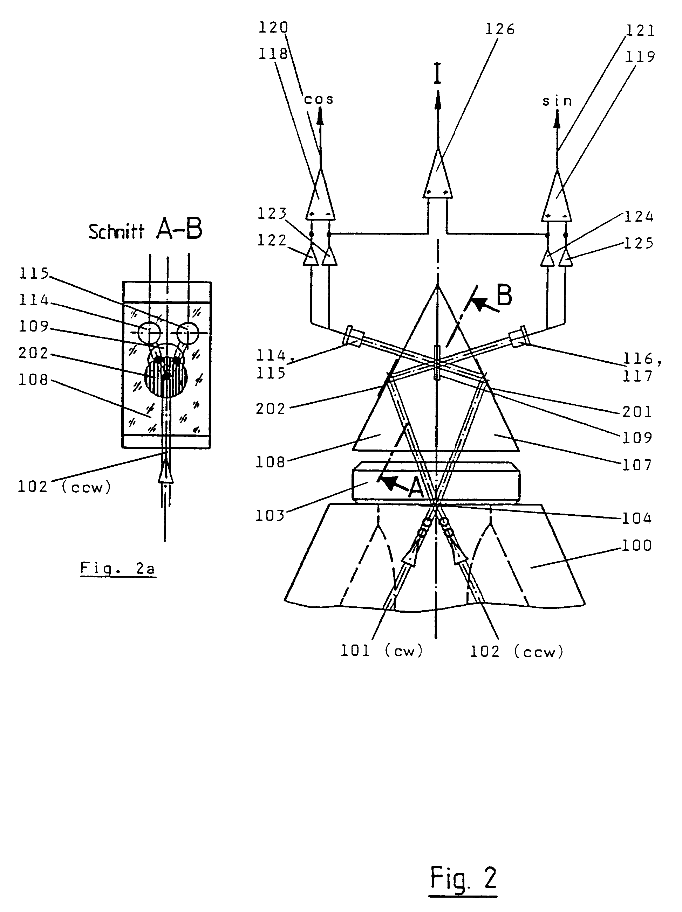

In den Figuren 2, 2a ist eine weitere Ausgestaltung einer Auslesevorrichtung dargestellt. Diese weist bis auf die beiden Glimmerplättchen und die beiden Wollastonprismen alle Elemente von Figur 1 auf. Die Paare von Photodioden 114, 115; 116, 117 sind allerdings senkrecht zur Zeichenebene hintereinander angeordnet. Die Funktionen der Glimmerplättchen und der Wollastonprismen werden durch zwei Phasengitter 201, 202 übernommen, die den jeweils einfallenden Laserstrahl in zwei gebeugte Teilstrahlen aufspalten. Beide Teilstrahlen haben bezüglich der + ersten und - ersten Beugungsordnung bei ca. 40,5% der Intensität einen öffnungswinkel, der durch die Gitterkonstante und die Laserwellenlänge bestimmt ist. Die Lage des Phasengitters im Strahlenverlauf entscheidet über die Phasenlage dieser beiden gebeugten Strahlen.

Um jeweils die beiden gebeugten Strahlen, die aus den beiden Strahlen 101 und 102 aus dem Auskoppelspiegel 103, 104 entstanden sind, zur Interferenz bringen zu können, müssen die beiden Phasengitter 201, 202 die gleiche Gitterkonstante aufweisen und im gleichen Abstand von der Strahlvereinigungsstelle liegen. Da beide Phasengitter phasenschiebend wirken, kann durch Justieren der Baugruppe die Phasenlage auf exakt 90° gebracht werden. Somit entstehen an den vier Empfängerflächen der Photodioden 114 bis 117 jeweils zwei Signalpaare mit 90° Phasenverschiebung, die in gleicher Weise wie in Figur 1 verarbeitet werden und aus denen sich das Vorzeichen der Differenzfrequenz und damit die Drehrichtung des Ringlaserkreisels ableiten läßt.

Es liegt auf der Hand, daß die Phasengitter 201, 202 auch im Durchlicht auf der Unterseite der dreieckförmigen Konfiguration 107, 108 angeordnet sein können. Auch im vorliegenden Fall läßt sich die Auslesevorrichtung sowohl gehäuse- als auch blockfest montieren.

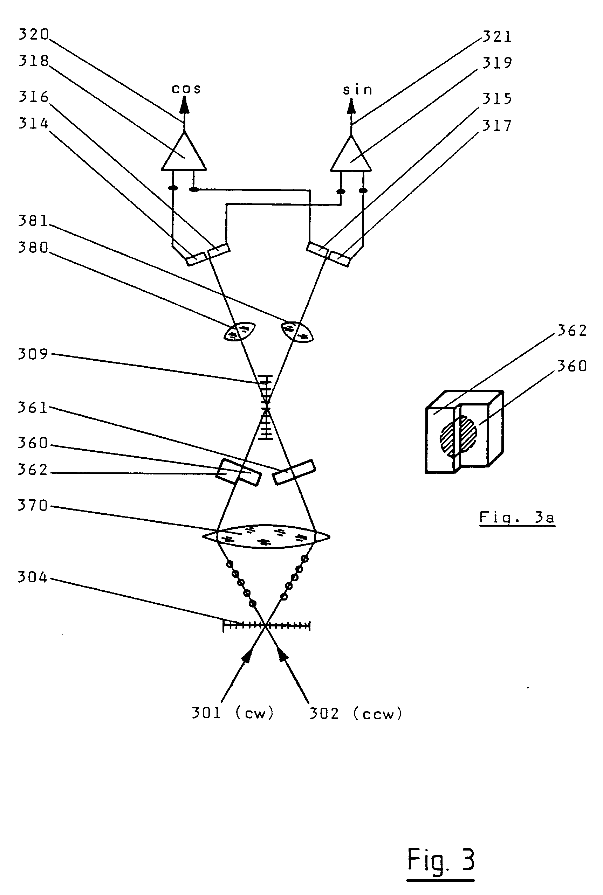

Gemäß Figur 3 ist eine Auslesevorrichtung dargestellt, die von einer geometrischen Strahlaufspaltung und phasenschiebenden Mitteln Gebrauch macht.

Der im Uhrzeigersinn umlaufenden Teilstrahl cw-301 und der im Gegenuhrzeigersinn umlaufenden Teilstrahl ccw-302 werden wiederum an einem teildurchlässigen Spiegel 304 ausgekoppelt. Eine Fokuslinse 370 bündelt die beiden divergierenden Teilstrahlen. Die hinter der Fokuslinse 370 konvergierenden Teilstrahlen durchlaufen zwei lichtdurchlässige Plättchen 360 und 361. Das eine Plättchen 360 trägt eine den halben Bündelquerschnitt abdeckende dielektrische Stufe 362, die den durch sie hindurchtretenden Wellenteil gegenüber dem benachbarten Wellenteil um λ/4 (90°) in der Wellenphase verzögert.

Die durch die beiden Plättchen 361; 360, 362 hindurchtretenden Teilstrahlen werden an einem teildurchlässigen Spiegel 309 teilweise reflektiert und teilweise hindurchgelassen, wobei jeweils im Gegentakt modulierte Strahlbündel entstehen, die durch zwei Linsen 380, 381 in Form von Halbkreisfeldern auf Photoempfängerpaaren 314, 316 und 315, 317 abgebildet werden. Die von den Photoempfängerpaaren erzeugten Signale sind jeweils um 90° in der Phase verschoben, so daß an den Ausgängen 320, 321 der Differenzverstärker 318, 319 wiederum Quadratursignale (cos, sin) entstehen.

Figur 3a zeigt in perspektivischer Ansicht das die phasenschiebende Stufe 362 aufweisende Plättchen 360, das so in bezug auf den Bündelquerschnitt auszurichten ist, daß die eine Hälfte des Bündelquerschnitts in bezug auf den anderen Teilstrahl keine Phasenverschiebung und die andere Hälfte des Bündelquerschnitts in bezug auf den anderen Teilstrahl eine Phasenverschiebung um 90° erfährt.

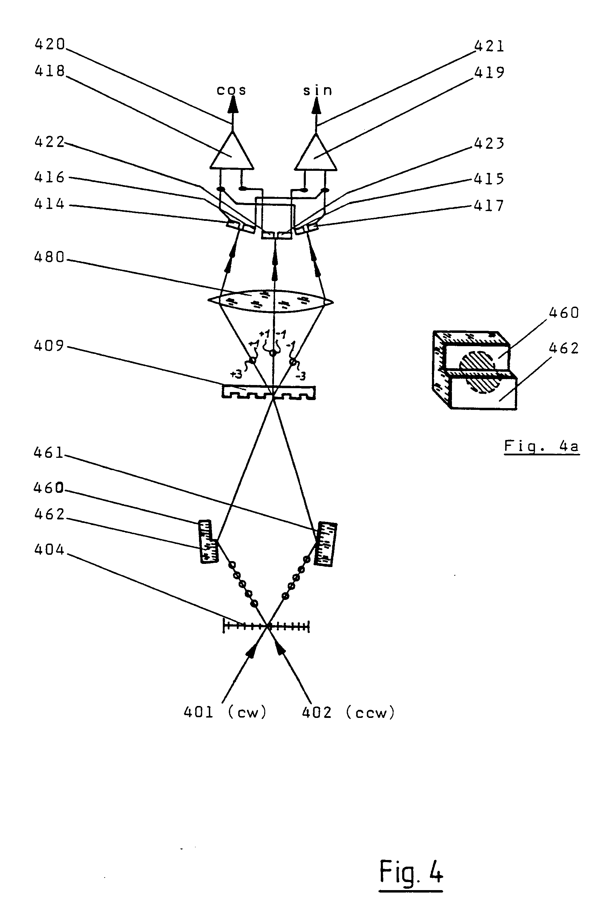

Gemäß Figur 4 werden statt im Durchlicht arbeitende Plättchen Spiegelplättchen 461; 460, 462 verwendet, die zugleich die über den teildurchlässigen Spiegel 404 ausgekoppelten divergierenden Teilstrahlen 401, 402 bündeln, wobei das Spiegelplättchen 460 eine Spiegelstufe 462 trägt, die eine Höhe entsprechend λ/8 aufweist, so daß das hin- und herlaufende Teilbündel insgesamt eine Phasenverschiebung von 90° erfährt. Als Strahlvereiniger dient im vorliegenden Fall ein verlustfreies laminares Phasengitter 409 mit unterdrückter nullter Beugungsordnung, dessen Gitterkonstante an den Winkel zwischen den einfallenden Strahlen und die Wellenlänge des verwendeten Laserlichts angepaßt ist. Die Strahlen entsprechend den ± dritten Beugungsordnungen sind im Gegentakt zu den Strahlen entsprechend den ± ersten Beugungsordnungen moduliert. Diese gebeugten Strahlen werden durch eine Linse 480 fokussiert und auf drei Photozellenpaaren 414 bis 417, 422, 423 abgebildet, wobei die Bündelquerschnitte jeweils Hälften aufweisen, die in der Phase um 90° verschoben sind. Die Ausgangssignale der drei Photozellenpaare sind auf zwei Differenzverstärker 418, 419 geschaltet, an deren Ausgängen 420, 421 Quadratursignale mit sin- und cos-Modulation entstehen.

Figur 4a zeigt in perspektivischer Ansicht das Spiegelplättchen 460 mit der Spiegelstufe 462 zur Phasenverschiebung der einen Hälfte des Bündelquerschnittes. Wenn bei der Auslesevorrichtung gemäß Figur 4 der Ringlaserkreisel um einen gehäusefesten Drehpunkt Drehschwingungen ausführt, so kann man das Phasengitter 409 mit einer strahlvereinigenden Gitterstruktur versehen, deren Gitterstreifen in der Teilungsphase so versetzt sind, daß die Frequenzmodulation der bewegten Teilstrahlen am ruhenden Phasengitter die Frequenzmodulation der Ringlasermoden durch die Drehschwingungen kompensiert (Ditherkompensation). Die Lage des Drehpunktes und die Dimensionierung der optischen übertragungsglieder zwischen dem Auskoppelspiegel 404 und dem Phasengitter 409 muß hierbei entsprechend gewählt werden. Die Strahlungsempfänger und die Anpaßoptik müssen die Drehschwingung mitmachen, damit die örtliche feste Zuordnung der Strahlungsquerschnittfläche zu den Empfangsflächen der Photodioden erhalten bleibt.

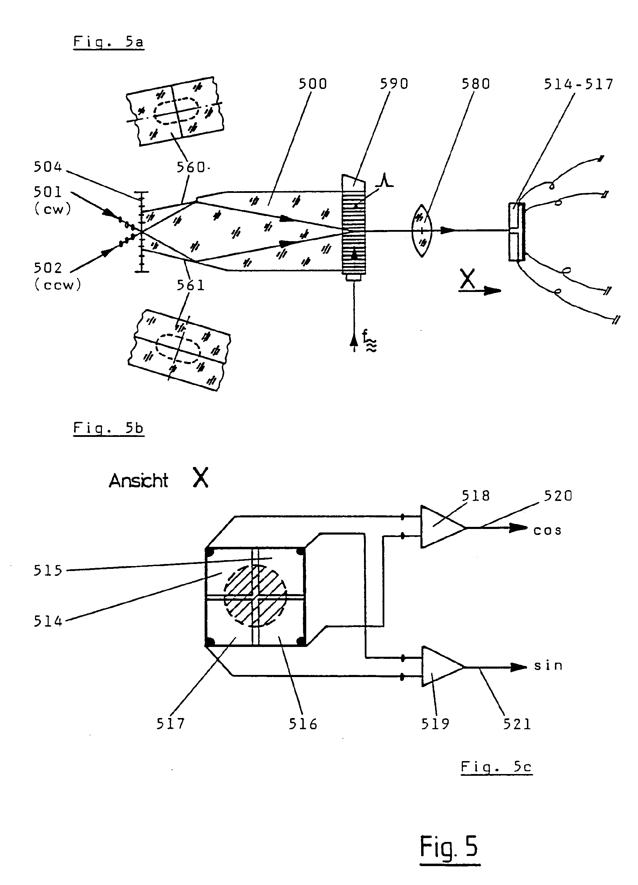

Gemäß Figur 5 weist ein Prisma 500 total reflektierende Umlenkflächen 560, 561 auf, auf die die über den teildurchlässigen Spiegel 504 ausgekoppelten Teilstrahlen cw-501 und ccw-502 auftreffen. Die Umlenkfläche 560 weist quer zum auftreffenden Teilstrahl 502 eine phasenschiebende Stufe (siehe Figur 5a) auf, und die Umlenkfläche 560 weist parallel zum auftreffenden Teilstrahl 501 eine phasenschiebende Stufe auf (siehe Figur 5b). Die Stufen sind symmetrisch zum Strahlenquerschnitt angeordnet und sie führen eine 90° Phasenverschiebung jeweils zur benachbarten Strahlhälfte ein. Eine akustooptische Zelle 590 vereinigt die Teilstrahlen durch Gitterbeugung und eine Linse 580 bildet die überlagerten Phasenverschobenen Bilder auf eine Photodiodenanordnung 514 bis 517 ab, wie dies in Figur 5c dargestellt ist. Die Ausgangssignale der Photodioden 514 bis 517 werden zwei Differenzverstärkern 518, 519 zugeführt, an deren Ausgängen 520, 521 Quadratursignale mit sin- und cos-Modulation entstehen.

Bei der akustooptischen Zelle 590 handelt es sich um ein Phasengitter, das von einer laufenden Ultraschallwelle bewegt wird. Dieses Phasengitter verschiebt die Teilstrahlfrequenzen der Lasermoden entsprechend der Treibergrundfrequenz der akustooptischen Zelle und der Ordnungszahl der Beugungsordnung. Mit Vorteil kann die Treiberfrequenz der akustooptischen Zelle durch einen Frequenz-Phasenregelkreis so in einem festen Verhältnis zu einer mechanischen Hilfsrotation (Dither) des Ringlaserkreisels gehalten werden, daß die durch die Hilfsrotation bedingte Frequenzverschiebung der Lasermoden durch die akustooptische Frequenzverschiebung der Lasermoden bei der beugenden Strahlvereinigung kompensiert wird. Hierdurch ergibt sich eine elegante Möglichkeit der Ditherkompensation.

## Patentansprüche

1. Auslesevorrichtung für einen Ringlaserkreisel, bei dem zwei Laserstrahlen in entgegengesetzten Richtungen umlaufen, über einen teildurchlässigen Spiegel aus dem Ringresonator ausgekoppelt und über eine strahlaufspaltende Anordnung auf Detektoren abgebildet werden, **dadurch gekennzeichnet,** daß die strahlaufspaltende Anordnung zur Vorgabe gleicher Weglängen symmetrisch ausgebildet ist und umfaßt:
Einrichtungen (105, 106) zur gegensinnigen Polarisierung der beiden Teilstrahlen (cw-101, ccw-102);
eine Einrichtung (107, 108, 109) zur überlagerung der beiden gegensinnig polarisierten Teilstrahlen; und
Einrichtungen (110, 111) zur geometrischen Aufspaltung der beiden überlagerten Teilstrahlen und zur Einführung einer Phasenverschiebung zwischen den beiden Teilstrahlen vor ihrer Abbildung auf den Detektoren (114-117).

2. Auslesevorrichtung für einen Ringlaserkreisel, bei dem zwei Laserstrahlen in entgegengesetzten Richtungen umlaufen, über einen teildurchlässigen Spiegel aus dem Ringresonator ausgekoppelt und über eine strahlaufspaltende Anordnung auf Detektoren abgebildet weren, **dadurch gekennzeichnet,** daß die strahlaufspaltende Anordnung zur Vorgabe gleicher Weglängen symmetrisch ausgebildet ist und umfaßt:
Einrichtungen (201, 202) zur Aufspaltung der beiden Teilstrahlen durch Beugung;
einen gegenseitigen Versatz dieser Aufspaltungseinrichtungen (201-202) zur Vorgabe einer Phasenlage; und
eine Einrichtung (107, 108, 109) zur überlagerung der aufgespaltenen und in der Phase verschobenen Teilstrahlen zwecks Abbildung auf den Detektoren (114-117).

3. Auslesevorrichtung für einen Ringlaserkreisel, bei dem zwei Laserstrahlen in entgegengesetzten Richtungen umlaufen, über einen teildurchlässigen Spiegel aus dem Ringresonator ausgekoppelt und über eine strahlaufspaltende Anordnung auf Detektoren abgebildet werden, **dadurch gekennzeichnet,** daß die strahlaufspaltende Anordnung zur Vorgabe von im wesentlichen gleichen Weglängen im wesentlichen symmetrisch ausgebildet ist und umfaßt:
eine Einrichtung (360, 362; 460, 462; 560, 561) zur geometrischen Strahlteilung und Phasenschiebung; und
eine Einrichtung (309, 409, 590) zur überlagerung der aufgespaltenen und phasenverschobenen Teilstrahlen vor ihrer Abbildung auf den Detektoren.

4. Vorrichtung nach Anspruch 1, **dadurch gekennzeichnet,**
daß die Einrichtungen zur gegensinnigen Polarisierung der beiden Teilstrahlen aus λ/4-Verzögerern (105, 106) bestehen;
daß die Einrichtung zur überlagerung der beiden gegensinnig polarisierten Teilstrahlen ein symmetrisches Umlenkprisma umfaßt, welches aus zwei unter Zwischenfügung einer polarisationsneutralen Strahlteilerschicht (109) zusammengekitteten Prismenhälften (107, 108) besteht und dessen Seitenflächen total reflektierend sind; und
daß die Einrichtungen zur Strahlaufspaltung und Phasenschiebung durch Wollaston-Prismen (110, 111) vorgegeben sind, die in bezug aufeinander in der Strahlenachse verdreht sind.

5. Vorrichtung nach Anspruch 2, **dadurch gekennzeichnet,**
daß die Einrichtungen zur Aufspaltung der beiden Teilstrahlen durch Phasengitter (201, 202) vorgegeben sind; und
daß die Einrichtung zur überlagerung der beiden aufgespalteten Teilstrahlen ein Symmetrisches Umlenkprisma umfaßt, welches aus zwei unter Zwischenfügung einer polarisationsneutralen Strahlteilerschicht (109) zusammengekitteten Prismenhälften (107, 108) besteht, auf dessen Seitenflächen oder Grundfläche die Phasengitter angeordnet sind, wobei die Phasenbeziehung durch Justierung des Umlenkprismas vorgegeben wird.

6. Vorrichtung nach Anspruch 3, **dadurch gekennzeichnet,** daß die Einrichtung zur geometrischen Strahlteilung und Phasenschiebung eine dielektrische Stufe (362, 462, 560, 561) in wenigstens einem Teilstrahl umfaßt, die den halben Strahlquerschnitt abdeckt und im Durchlicht bzw. im reflektierten Licht eine λ/4-Phasenschiebung bewirkt.

7. Vorrichtung nach Anspruch 6, **dadurch gekennzeichnet,** daß die Einrichtung zur überlagerung der geteilten und phasenverschobenen Teilstrahlen einen halbdurchlässigen Spiegel (309) umfaßt.

8. Vorrichtung nach Anspruch 6, **dadurch gekennzeichnet,** daß die Einrichtung zur überlagerung der geteilten und phasenverschobenen Teilstrahlen ein laminares Phasengitter (409) umfaßt.

9. Vorrichtung nach Anspruch 6, **dadurch gekennzeichnet,** daß die Einrichtung zur überlagerung der geteilten und phasenverschobenen Teilstrahlen eine akustooptische Zelle (590) umfaßt.

10. Vorrichtung nach Anspruch 9, **dadurch gekennzeichnet,** daß der akustooptischen Zelle (590) ein Prisma (500) vorgeschaltet ist, welches an reflektierenden Flächen (560, 561) mit zueinander senkrecht verlaufenden phasenschiebenden Spiegelstufen versehen ist, um den Strahl geometrisch in vier Quadranten mit unterschiedlicher Phasenbeziehung aufzuspalten.

11. Vorrichtung nach Anspruch 9, **dadurch gekennzeichnet,** daß die Treiberfrequenz der akustooptischen Zelle (590) in Beziehung zu einer mechanischen Hilfsrotation des Ringlaserkreisels (100) steht, um die durch die Hilfsrotation bedingte Phasenverschiebung zu eliminieren.

## Claims

1. Readout apparatus for a ring laser gyro at which two laser beams are propagating in opposite directions, are decoupled from the ring resonator by means of a partially transmissive mirror and are imaged onto detectors by means of a beam splitting device, **characterized in that** the beam splitting device is designed symmetrically in order to provide the same path length for each beam and that it comprises:
means (105,106) for polarizing both partial beams (cw-101, ccw-102) in opposite senses;
means (107,108,109) for superimposing both oppositely polarized partial beams; and
means (110,111) for geometrically splitting both superimposed partial beams and for inserting a phase shift between both partial beams before imaging them on the detectors (114-117).

2. Readout apparatus for a ring laser gyro at which two laser beams are propagating in opposite directions, are decoupled from the ring resonator by means of a partially transmissive mirror and are imaged onto detectors by means of a beam splitting device, **characterized in that** the beam splitting device is symmetrically designed in order to provide the same path length for each beam and that it comprises:
means (201,202) for splitting both partial beams by means of diffraction;
a displacement of said splitting means (201,202) with respect to each other for inserting a phase relationship; and
means (107,108,109) for superimposing said splitted and phase shifted partial beams in order to image them on said detectors (114-117).

3. Readout apparatus for a ring laser gyro at which two laser beams are propagating in opposite directions, are decoupled from the ring resonator by means of a partially transmissive mirror and are imaged onto detectors by means of a beam splitting device, **characterized in that** the beam splitting device is symmetrically designed in order to provide the same path length for each beam and that it comprises:
means (360,362;460,462;560,561) for geometrically beam splitting and phase shifting; and
means (309,409,590) for superimposing the splitted and phase shifted partial beams before imaging them on the detectors.

4. Apparatus according to claim 1, **characterized** **in that**
said means for oppositely polarizing both partial beams consists of λ/4 retarders (105,106);
that said means for superimposing both oppositely polarized partial beams comprises a symmetrical deviating prism which consists of two prism halves (107,108) cemented with each other under inserting a polarization neutral beam splitting layer (109) and having totally reflecting lateral faces; and
that said means for beam splitting and phase shifting are Wollaston prisms (110,111) which are rotated with respect to each other in their beam axis.

5. Apparatus according to claim 2, **characterized** **in that,**
the means for splitting both partial beams are implemented by phase gratings (201,202); and
the means for superimposing both splitted partial beams comprises a symmetrical deviating prism which consists of two prism halves (107,108) cemented with each other under inserting a polarization neutral beam splitting layer (109) with said phase gratings being mounted on the lateral faces or the base face, respectively, whereat the phase relationship is provided by adjusting the deviating prism.

6. Apparatus according to claim 3, **characterized in that** the means for geometrical beam splitting and phase shifting comprise a dielectrical step (362,462,560,561) inserted into at least one partial beam, which covers half of the beam cross section and which implements a λ/4 phase shift within the transmitted or reflected light beam.

7. Apparatus according to claim 6, **characterized in that** the means for superimposing the splitted and phase shifted partial beams comprise a partially transmissive mirror (309).

8. Apparatus according to claim 6, **characterized in that** the means for superimposing the splitted and phase shifted partial beams comprise a laminar phase grating (409).

9. Apparatus according to claim 6, **characterized in that**, the means for superimposing the splitted and phase shifted partial beams comprise an acoustooptical cell (590).

10. Apparatus according to claim 9, **characterized in that** in front of the acoustooptical cell (590) a prism (500) is arranged which comprises at reflecting faces (560,561) phase shifting mirror steps arranged normal to each other in order to geometrically split up the beam into 4 quadrants with different phase relationship.

11. Apparatus according to claim 9, **characterized in that** the driving frequency of the acoustooptical cell (590) is related to a mechanical auxiliary rotation of the ring laser gyro (100) in order to eliminate phase shifts due to the auxiliary rotation.

## Revendications

1. Dispositif de lecture pour un gyrolaser, dans lequel deux rayons laser circulent dans des directions opposées, et sont découplés du résonateur annulaire par l'intermédiaire d'un miroir partiellement transparent, l'image de ces deux rayons étant formée sur des détecteurs par l'intermédiaire d'un agencement de dédoublement de rayon, caractérisé en ce que l'agencement de dédoublement de rayon est d'une configuration symétrique, en vue d'imposer des longueurs de parcours identiques, et comprend:
des dispositifs (105, 106) pour la polarisation en sens contraires des deux rayons partiels (cw-101, ccw-102);
un dispositif (107, 108, 109) pour la superposition des deux rayons partiels polarisés en sens contraires; et
des dispositifs (110, 111) pour le dédoublement géométrique des deux rayons partiels superposés et pour introduire un déphasage entre les deux rayons partiels, avant de former leur image sur les détecteurs (114-117).

2. Dispositif de lecture pour un gyrolaser annulaire dans lequel deux rayons laser circulent dans des directions opposées, et sont découplés du résonateur annulaire par l'intermédiaire d'un miroir partiellement transparent, l'image de ces deux rayons étant formée sur des détecteurs par l'intermédiaire d'un agencement de dédoublement de rayon, caractérisé en ce que l'agencement de dédoublement de rayon est d'une configuration symétrique, en vue d'imposer des longueurs de parcours identiques, et comprend:
des dispositifs (201, 202) pour le dédoublement des deux rayons partiels par diffraction;
un décalage réciproque de ces dispositifs de dédoublement (201-202) pour imposer un état de phase; et
un dispositif (107, 108, 109) pour la superposition des rayons partiels dédoublés et décalés en phase, en vue de former leur image sur les détecteurs (114-117).

3. Dispositif de lecture pour un gyrolaser annulaire, dans lequel deux rayons laser circulent dans des directions opposées, et sont découplés du résonateur annulaire par l'intermédiaire d'un miroir partiellement transparent, l'image de ces deux rayons étant formée sur des détecteurs par l'intermédiaire d'un agencement de dédoublement de rayon, caractérisé en ce que l'agencement de dédoublement de rayon est d'une configuration symétrique, en vue d'imposer des longueurs de parcours identiques, et comprend:
un dispositif (360, 362; 460, 462; 560, 561) pour la division géométrique de rayon et le déphasage; et
un dispositif (309, 409, 590) pour la superposition des rayons partiels dédoublés et déphasés avant de former leur image sur les détecteurs.

4. Dispositif selon la revendication 1, caractérisé en ce que les dispositifs pour la polarisation en sens contraires des deux rayons partiels, sont constitués par des éléments de retard λ/4 (105, 106);
en ce que le dispositif pour la superposition des deux rayons partiels polarisés en sens contraires comprend un prisme de déviation symétrique, dont les surfaces latérales sont totalement réfléchissantes, et qui est constitué de deux demi-prismes (107, 108) assemblés par ciment, entre lesquels est interposée une couche séparatrice (109) de polarisation neutre; et
en ce que les dispositifs pour le dédoublement de rayon et le déphasage sont réalisés par des prismes de Wollaston (110, 111), qui sont tournés l'un par rapport à l'autre dans l'axe de rayon.

5. Dispositif selon la revendication 2, caractérisé en ce que les dispositifs pour le dédoublement des deux rayons partiels sont réalisés par des réseaux de phase (201, 202); et
en ce que le dispositif pour la superposition des deux rayons partiels dédoublés comprend un prisme de déviation symétrique, qui est constitué de deux demi-prismes (107, 108) assemblés par ciment, entre lesquels est interposée une couche séparatrice (109) de polarisation neutre, et sur les surfaces latérales ou la surface de base duquel sont disposés les réseaux de phase, la relation des phases étant prédéfinie par réglage du prisme de déviation.

6. Dispositif selon la revendication 3, caractérisé en ce que le dispositif pour division géométrique de rayon et déphasage, comprend un étage diélectrique (362, 462, 560, 561) dans au moins un rayon partiel, et qui recouvre la demi-section transversale de rayon et produit dans la lumière traversante ou la lumière réfléchie, un déphasage de λ/4.

7. Dispositif selon la revendication 6, caractérisé en ce que le dispositif pour la superposition des rayons partiels divisés et déphasés, comprend un miroir semi-transparent (309).

8. Dispositif selon la revendication 6, caractérisé en ce que le dispositif pour la superposition des rayons partiels divisés et déphasés, comprend un réseau de phase laminaire (409).

9. Dispositif selon la revendication 6, caractérisé en ce que le dispositif pour la superposition des rayons partiels divisés et déphasés comprend une cellule acousto-optique (590).

10. Dispositif selon la revendication 9, caractérisé en ce que la cellule acousto-optique (590) est précédée d'un prisme (500), qui, à des surfaces réfléchissantes (560, 561), est pourvu d'étages de miroir de déphasage perpendiculaires entre-eux, en vue de dédoubler géométriquement le rayon en quatre quadrants à déphasages différents.

11. Dispositif selon la revendication 9, caractérisé en ce que la fréquence d'excitateur de la cellule acousto-optique (590) est en relation avec une rotation auxiliaire mécanique du gyrolaser annulaire (100), en vue d'éliminer le déphasage causé par la rotation auxiliaire.
